# EUROPÄISCHE PATENTSCHRIFT

(11) **EP 3 077 671 B1**
(45) Veröffentlichungstag und Bekanntmachung des Hinweises auf die Patenterteilung: **14.04.2021**
(21) Anmeldenummer: 14808922.0
(22) Anmeldetag: 02.12.2014
(51) Int. Cl.: B60L 1/00, B60T 17/02, B61D 43/00, F04D 27/02, F04B 35/04, F04B 41/02, F04B 49/06, F04B 49/08, F04B 49/20

(54) **KOMPRESSORSYSTEM UND VERFAHREN ZUM BETRIEB DES KOMPRESSORSYSTEMS IN ABHÄNGIGKEIT VOM BETRIEBSZUSTAND DES SCHIENENFAHRZEUGS**
COMPRESSOR SYSTEM AND METHOD FOR OPERATING THE COMPRESSOR SYSTEM IN DEPENDENCE ON THE OPERATING STATE OF THE RAIL VEHICLE
SYSTÈME DE COMPRESSEUR ET PROCÉDÉ DE COMMANDE DU SYSTÈME DE COMPRESSEUR EN FONCTION D'UN ÉTAT DE FONCTIONNEMENT DU VÉHICULE FERROVIAIRE

(30) Priorität: 05.12.2013 DE 102013113555
(43) Veröffentlichungstag der Anmeldung: 12.10.2016
(73) Patentinhaber: KNORR-BREMSE Systeme für Schienenfahrzeuge GmbH, 80809 München (DE)
(72) Erfinder: ASSMANN, Gert, 80337 München (DE); KIPP, Thomas, 81547 München (DE); MERKEL, Thomas, 50354 Hürth (DE); HERING, Karl, 83677 Reichersbeuern (DE); FRANK, Robert, 82110 Germering (DE); MUELLER, Claus, 82515 Wolfratshausen (DE)
(86) Internationale Anmeldenummer: PCT/EP2014/076164
(87) Internationale Veröffentlichungsnummer: WO 2015/082430

(56) Entgegenhaltungen:
- WO-A1-02/38251
- DE-A1-102005 033 084
- JP-A- H08 338 369
- JP-A- 2007 285 307
- US-A- 4 756 669
- US-A1- 2004 175 272
- US-A1- 2004 191 073

## Beschreibung

### GEBIET DER ERFINDUNG

Die Erfindung betrifft ein Kompressorsystem für ein Schienenfahrzeug, umfassend einen von einer elektrischen Maschine über eine Antriebswelle angetriebenen Kompressor zur Erzeugung von Druckluft für mindestens einen Druckluftbehälter, wobei die elektrische Maschine zumindest mittelbar über eine Regelungseinrichtung zum Betrieb der elektrischen Maschine mit zumindest einer zwischen einer maximalen Drehzahl und einer minimalen Drehzahl befindlichen Nenndrehzahl ansteuerbar ist, wobei ferner in einer stromabwärts vom Kompressor angeordneten druckluftführenden Leitung zumindest ein Drucksensor zur Bestimmung des Drucks für die Regelungseinrichtung angeordnet ist. Ferner betrifft die Erfindung auch ein Verfahren zur Steuerung des erfindungsgemäßen Kompressorsystems.

### HINTERGRUND DER ERFINDUNG

An Kompressoren in Schienenfahrzeugen werden vielfältige, teilweise konträre Anforderungen gestellt, wie beispielsweise eine hohe Lieferleistung, ausreichende Einschaltdauern, geringe Schallemissionen, ein niedriger Energieverbrauch, ein kleiner Bauraum sowie niedrige Einstands- und Life-Cycle-Kosten. Dabei gibt es je nach Betriebszustand des Schienenfahrzeugs stark unterschiedliche Anforderungsprofile an den Kompressor. Die typische Problemstellung bei der Auslegung eines Kompressors ist, den besten Kompromiss zwischen diesen Anforderungen zu finden, der in allen Betriebszuständen des Schienenfahrzeugs akzeptabel ist. In der Regel werden in Schienenfahrzeugen Kompressoren eingesetzt, die elektrisch angetrieben werden. Die Kompressoren werden in Ein-/ Ausschaltbetrieb zwischen dem unteren Einschaltdruck und dem oberen Abschaltdruck mit einer konstanten Drehzahl, der sogenannten Nenndrehzahl, betrieben. Der Kompressor wird so dimensioniert, dass eine vorgegebene Auffüllzeit erreicht und eine minimale Einschaltdauer im Betrieb nicht unterschritten wird.

Aus der JP 2007 285307 A ist ein Umrichter-gesteuerter Schraubenkompressor bekannt, welcher um den Ausgangsdruck des Schraubenkompressors konstant zu halten, die Drehzahl regelt.

Die WO 02/38251 A1 offenbart einen Kompressor mit einem über einen Motor angetriebenen Rotor. Der den Rotor antreibende Motor wird dabei in Abhängigkeit von Parametern des kompensierten Gases geregelt.

Aus der DE 10 2005 033084 A1 ist ein Verdichter zur Erzeugung von Druckluft, mit Mitteln zur Öltemperaturregelung bekannt. Die Mittel zur Öltemperaturregelung umfassen dabei einen drehzahlvariablen Antrieb für das Lüfterrad, wobei eine Regeleinrichtung die Drehzahl des Lüfterrades in Abhängigkeit der vom Kühler an die aus der Umgebung stammenden Kühlluft übertragenen Wärme anpasst.

Aus dem allgemein bekannten Stand der Technik geht hervor, dass der Betrieb des Kompressors nicht zwischen den unterschiedlichen Betriebszuständen des Schienenfahrzeugs unterscheidet. Der Lüfter des Kühlsystems unterliegt dabei dem gleichen Betriebsregime wie der Kompressor, da der Lüfter in der Regel direkt vom Kompressor mit angetrieben wird.

Während einer Auffüllphase wird der Kompressor bei Nenndrehzahl betrieben. Die Nenndrehzahl ist so gewählt, dass der Kompressor im Dauerbetrieb betrieben werden kann. Ferner ist die Baugröße des Kompressors so gewählt, dass im Streckenbetrieb eine minimale Einschaltdauer nicht unterschritten und die maximale Auffüllzeit nicht überschritten wird. Im Streckenbetrieb wird der Kompressor intermittierend betrieben. Dabei wird der Kompressor gestartet wenn der Druck im Druckluftbehälter auf den Einschaltdruck abgefallen ist. Sobald der Abschaltdruck im Druckluftbehälter erreicht ist, wird der Kompressor mit Nenndrehzahl betrieben. Bei Erreichen des Abschaltdrucks wird der Kompressor ausgeschaltet und erst nach einem Druckabfall bis auf den Einschaltdruck erneut gestartet. Bei den elektrisch angetriebenen Schienenfahrzeugen wird während einer Bremsphase der Antriebsmotor als elektrodynamische Bremse eingesetzt. Hierbei entsteht elektrische Energie, deren Rückspeisung ins Netz häufig nicht wirtschaftlich ist oder teilweise nicht möglich ist. Während eines Stationsbetriebs, bei dem das Schienenfahrzeug am Bahnhof hält, wird der Kompressor ebenso wie während der Fahrt intermittierend betrieben. Da kein dominantes Fahrgeräusch vorhanden ist, sollten Schallemissionen des Kompressors und des Lüfters vermieden werden. Da die Luftfederung im Bahnhof einen erhöhten Luftbedarf wegen dem Ein-/ Aussteigen der Fahrgäste aufweist führt dies häufig zum Einschalten des Kompressors und des Lüfters, und damit zu unerwünschten Schallemissionen während des Halts am Bahnhof. Darüber hinaus werden Schienenfahrzeuge, insbesondere im Nahverkehr, häufig in der Nähe von Wohngebieten aufgerüstet abgestellt, um beispielsweise ein Einfrieren zu vermeiden. Schallemissionen sind hierbei soweit als möglich zu vermeiden. Aufgrund von Leckagen erreicht der Druck in den Druckluftbehältern in einer Nacht mehrfach den unteren Einschaltdruck des Kompressors, so dass ein Nachfüllen erforderlich ist und der Kompressor intermittierend bei Nenndrehzahl betrieben wird. Ferner treten neben den Schallemissionen des Kompressors hierbei weitere Geräusche wie z.B. das störende Entlüftungsgeräusch des Lufttrockners auf.

### OFFENBARUNG DER ERFINDUNG

Es ist daher die Aufgabe der vorliegenden Erfindung ein Kompressorsystem und ein Verfahren zum Betrieb des Kompressorsystems dahingehend zu optimieren, dass im Wesentlichen Energie zum Betreiben des Kompressorsystems eingespart wird und die Schallemissionen des Kompressorsystems gesenkt werden.

Die Erfindung wird durch den Gegenstand des Anspruchs 1 definiert. Ein Verfahren zur Steuerung eines Kompressorsystems eines Schienenfahrzeuges ist in dem nebengeordneten Anspruch spezifiziert. Vorteilhafte Weiterbildungen der Erfindung gehen aus den nachfolgenden abhängigen Ansprüchen hervor.

Erfindungsgemäß ist ein Stellglied zur kontinuierlichen Beeinflussung der Drehzahl der elektrischen Maschine zwischen einer elektrischen Versorgung und der elektrischen Maschine angeordnet, wobei die Ansteuerung des Stellglieds über die Regelungseinrichtung erfolgt. Mit anderen Worten befindet sich das Stellglied im Leistungsfluss stromaufwärts der elektrischen Maschine und ist somit der elektrischen Maschine vorgeschaltet. Das Stellglied erlaubt einen Betrieb der elektrischen Maschine mit unterschiedlichen Drehzahlen. Dazu eignen sich insbesondere Frequenzumrichter oder Wechselrichter. Je nach Frequenz wird die Drehzahl der elektrischen Maschine und somit der Betrieb des Kompressors angepasst.

Die Regelungseinrichtung steuert zumindest mittelbar eine stromabwärts des Kompressors angeordnete Kühlereinheit mit Kühlerlüfter an, wobei eine Drehzahl des Kühlerlüfters kontinuierlich durch die Regelungseinrichtung einstellbar ist. Dazu ist in der Kühlereinheit vorzugsweise ein Stellglied integriert. Alternativ ist es auch denkbar, dass das Stellglied der Kühlereinheit zumindest vorgeschaltet ist. Verfahrenstechnisch wird der Kompressor in Abhängigkeit eines Betriebszustands des Schienenfahrzeugs mit einer Variablen, zwischen der maximalen Drehzahl und der minimalen Drehzahl, jeden Zwischenwert einnehmenden Drehzahl betrieben. Dadurch, dass die Kühlereinheit weder direkt noch mittelbar mit dem Kompressor verbunden ist erfolgt eine separate Ansteuerung der Kühlereinheit und somit eine separate Einstellung der Drehzahl des Kühlerlüfters. Vorteilhafterweise können der Kompressor und der Kühlerlüfter auch abgeschaltet werden. Dadurch bleibt der Kompressor zwar im Betrieb, fördert jedoch keine oder nur eine sehr geringe Druckluftmenge.

Vorzugsweise wird der Kompressor in einem Auffüllbetrieb des Schienenfahrzeugs mit der maximalen Drehzahl betrieben. Das Anheben der Drehzahl des Kompressors auf die maximale Drehzahl ist für den selten auftretenden und zeitlich begrenzten Auffüllbetrieb besonders vorteilhaft, da dies die Auffüllzeit verkürzt und darüber hinaus die Möglichkeit bietet, einen kleineren, leichteren und somit bauraumsparenden Kompressor einzusetzen. Daher ist im Auffüllbetrieb des Kompressors eine maximale Leistung des Kompressors vorrangig. Eine minimale Auffüllzeit wird somit durch die Erzeugung eines maximalen Volumens von Druckluft durch den Kompressor erzielt.

Besonders bevorzugt wird der Kompressor in einem Streckenbetrieb des Schienenfahrzeugs mit einer variablen Drehzahl, geringfügig oberhalb der minimalen Drehzahl, betrieben, wobei der Luftdruck in dem mindestens einen Druckluftbehälter geringfügig größer als der Einschaltdruck eingestellt wird. Mit anderen Worten kann über den Drucksensor der Druckverlauf überwacht werden, so dass der Luftdruck in dem mindestens einen Druckluftbehälter nahezu konstant, vorzugsweise ein bis zwei Zehntel bar oberhalb des Einschaltdrucks des Kompressors eingestellt wird. Je nach aktuellen Druckluftverbrauch variiert die Drehzahl der elektrischen Maschine und somit die Drehzahl des Kompressors, um den Luftdruck in den mindestens einen Druckluftbehälter nahezu konstant zu halten. Daher ist im Streckenbetrieb des Kompressors eine maximale Energieeinsparung des Kompressors vorrangig, die durch den variablen Betrieb des Kompressors mit der mindestens minimalen Drehzahl erzielt wird. Mithin wird nur so viel Druckluft vom Kompressor erzeugt, wie zur Einstellung des Luftdrucks, der geringfügig größer als der Einschaltdruck ist, in dem mindestens einen Druckluftbehälter nötig ist.

Daraus ergibt sich der Vorteil, dass durch einen geringeren Gegendruck in dem mindestens einen Druckluftbehälter der Energieverbrauch reduziert wird und der Kompressor schonender betrieben wird. Daraus resultiert ferner eine geringere Betriebstemperatur des Kompressors, wodurch die Kühlung des Kompressors ebenfalls geringer ausfällt. Ferner wird der Kühlerlüfter der Kühlereinheit so betrieben, dass innerhalb des angestrebten Temperaturbereichs eine möglichst niedrige Temperatur der Druckluft am Ausgang des Kompressors erzielt wird. Dies bietet den Vorteil eines höheren Anteils an flüssigem Wasser und eines geringeren Anteils an Wasserdampf in der Druckluft. Das flüssige Wasser kann in einem Vorabscheider separiert werden, während der Wasserdampf im Lufttrockner abgeschieden wird. Somit wird der Wassereintrag im Trockenmittel reduziert, wodurch ein kleinerer Anteil der Druckluft zur Regeneration benötigt wird.

Die Erfindung schließt die technische Lehre ein, dass der Kompressor in einem Bremsbetrieb des Schienenfahrzeugs mit einer Drehzahl zwischen der Nenndrehzahl und der maximalen Drehzahl betrieben wird und der mindestens eine Druckluftbehälter mindestens bis zum Abschaltdruck des Kompressors gespeist wird, jedoch höchstens bis zu einem maximalen Überdruck gespeist wird, wobei der Kompressor frühestens nach Erreichen des Abschaltdrucks jedoch spätestens nach Erreichen des maximalen Überdrucks mit einer variablen Drehzahl, zwischen Nenndrehzahl und minimaler Drehzahl, betrieben wird. Mit anderen Worten findet eine Nutzung der verfügbaren elektrischen Energie zum vollständigen Auffüllen des mindestens einen Druckluftbehälters statt. Anschließend geht die Drehzahl des Kompressors zurück in den Bereich oberhalb des Einschaltdrucks und erhält den zuvor definierten Maximaldruck in dem mindestens einen Druckluftbehälter aufrecht bis zum Ende der Bremsphase. Dies bietet den Vorteil der internen Nutzung der elektrischen Energie in der Bremsphase und ermöglicht eine Energieeinsparung, da eine Rückspeisung der elektrischen Energie in das elektrische Netz nicht in jedem Fall möglich ist. Daher ist im Bremsbetrieb des Kompressors die maximale Energierückgewinnung des Kompressors vorrangig. Diese wird insbesondere durch eine maximale Einspeisung von Druckluft in den mindestens einen Druckluftbehälter während des Bremsbetriebs und durch eine Aufrechterhaltung des maximalen Überdrucks im mindestens einen Druckluftbehälter erreicht.

Besonders bevorzugt wird der Kompressor nach beenden des Bremsbetriebs entweder abgeschaltet und bei Erreichen des Einschaltdrucks auf die minimale Drehzahl eingestellt. Dadurch spart der Kompressor am Ende der Bremsphase im folgenden Betrieb die Energie ein, die während der Bremsphase verbraucht wurde. Das Abschalten des Kompressors oder die Einstellung der minimalen Drehzahl wird solange beibehalten bis der Druck in den mindestens einen Druckluftbehälter den Regeldruck erreicht.

Gemäß eines Ausführungsbeispiels erhält die Regelungseinrichtung vor einem Stationsbetrieb von einem Zug-Management-System ein Signal über den bevorstehenden Stationsbetrieb, wobei die Drehzahl des Kompressors mindestens auf die Nenndrehzahl eingestellt wird, um den mindestens einen Druckluftbehälter bis zum maximalen Überdruck zu speisen. Somit werden zur Vorbereitung des Halts im Bahnhof alle Behälter bis auf den maximalen Druck befüllt. Anschließend wird das Druckniveau bis zum Stillstand gehalten.

Vorzugsweise wird der Kompressor während des Stationsbetriebs entweder abgeschaltet oder mit der minimalen Drehzahl betrieben. Somit kann im Stillstand der Kompressor ausgeschaltet werden oder auf minimale Drehzahl gehalten werden bis der Regeldruck im mindestens einen Druckluftbehälter erreicht wird. Während des Stationsbetriebs kann somit zumeist ein Betrieb des Kompressors vermieden werden. Der Kühlerlüfter bleibt soweit möglich abgeschaltet oder wird nur so schnell betrieben, dass die zulässige Maximaltemperatur im Kompressor oder am Druckluftausgang nicht überschritten wird. Dadurch werden während des Halts am Bahnhof Schallemissionen durch den Kompressor und den Kühlerlüfter minimiert. Ferner kann das gesamte Kompressorsystem bauraumsparender gebaut werden da die Möglichkeit des Verzichts auf passive Maßnahmen zur Schalldämmung entfällt. Daher sind im Stationsbetrieb des Kompressors die minimale Schallemission des Kompressors und des Kühlerlüfters vorrangig. Diese wird insbesondere durch die Abschaltung oder den Betrieb des Kompressors und des Kühlerlüfters bei minimaler Drehzahl erreicht.

Vorteilhafter Weise wird der Kompressor in einem Over-Night-Standby-Betrieb intermittierend zwischen der minimalen Drehzahl beim Abfallen des Druckes auf den Einschaltdruck und der Abschaltung des Kompressors beim Erreichen des Abschaltdrucks betrieben. Durch das reduzierte Drehzahlniveau erfolgt eine Minimierung der Schallemissionen während eines aufgerüsteten Abstellens des Schienenfahrzeugs. Ferner bleibt auch der Kühlerlüfter soweit möglich ausgeschaltet oder wird von der Regelungseinrichtung nur so schnell betrieben, dass die zulässige Maximaltemperatur im Kompressor oder am Druckluftausgang nicht überschritten wird. Alternativ kann die Kühlereinheit dazu genutzt werden, den Wasserdampfeintrag in den Lufttrockner soweit zu reduzieren, dass im Verlauf einer Nacht kein Regenieren des Lufttrockners erforderlich ist, so dass kein störendes Entlüftungsgeräusch auftritt.

Durch intern bereitgestellte Informationen des Schienenfahrzeugs, wird die Regelungseinrichtung je nach Betriebszustand des Schienenfahrzeugs derart betrieben, dass Energie zum Betreiben des Kompressorsystems eingespart wird und die Schallemissionen des Kompressorsystems gesenkt werden.

### KURZE BESCHREIBUNG DER ZEICHNUNGEN

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
Fig.1 ein Blockschaltbild des erfindungsmäßen Kompressorsystems, und
Fig.2 zwei zusammenhängende Diagramme, wobei im oberen Diagramm eine Drehzahl des Kompressors über die Zeit und im unteren Diagramm ein Druck des Kompressors über die Zeit aufgetragen sind.

### DETAILLIERTE BESCHREIBUNG EINER BEVORZUGTEN AUSFÜHRUNGSFORM

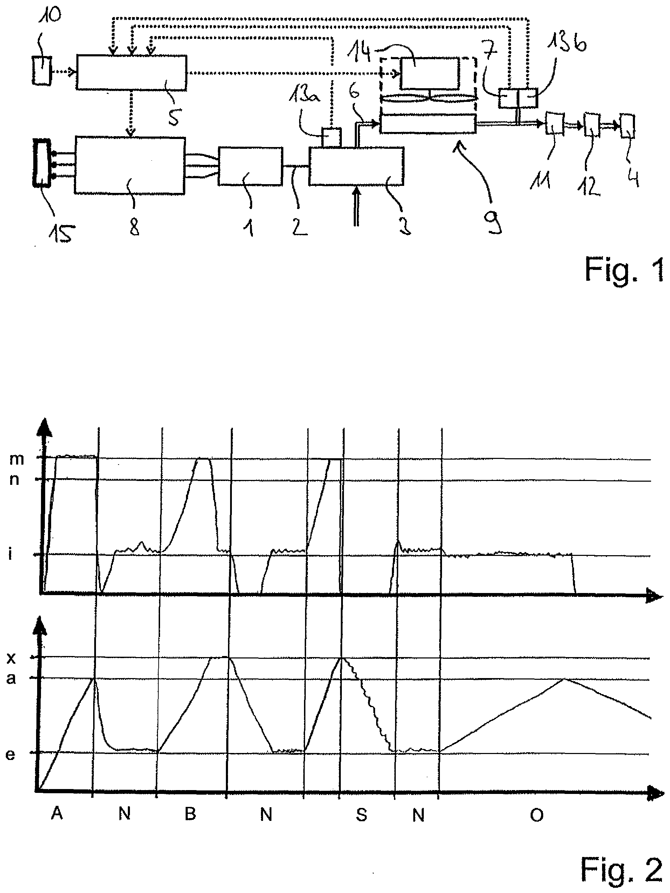

Gemäß Figur 1 weist ein Kompressorsystem für ein Schienenfahrzeug eine elektrische Maschine 1 auf, die über eine Antriebswelle 2 einen Kompressor 3 zur Erzeugung von Druckluft antreibt. Die vom Kompressor 3 erzeugte Druckluft wird über eine druckluftführende Leitung 6 zu einer Kühlereinheit 9 mit einem Kühlerlüfter 14 geleitet. Stromabwärts der Kühlereinheit 9 sind in der druckluftführenden Leitung 6 ein Drucksensor 7 und ein Temperatursensor 13b angeordnet. Desweiteren mündet die druckluftführende Leitung 6 in einen Vorabscheider 11 dem eine Luftaufbereitungsanlage 12 nachgeschaltet ist. Die getrocknete und von Partikel gesäuberte Druckluft wird dann in einem Druckluftbehälter 4 gespeist. Ein Temperatursensor 13a, der am Kompressor 3 angeordnet ist, so wie der Temperatursensor 13b und der Drucksensor 7 senden allesamt der Regelungseinrichtung 5 die gemessenen Temperaturen und den gemessenen Druck zu. Ferner erhält die Regelungseinrichtung 5 auch von einem Zug-Management- System 10 Signale. Darüber hinaus ist die Regelungseinrichtung 5 dazu geeignet, sowohl die Drehzahl der Kühlereinheit 9 zu steuern als auch Signale an ein Stellglied 8 zu leiten. Das Stellglied 8, das als Frequenzumrichter ausgebildet ist, stellt die Drehzahl der elektrischen Maschine 1 und somit die Drehzahl des Kompressors 3 ein. Dabei ist das Stellglied 8 zur kontinuierlichen Beeinflussung der Drehzahl der elektrischen Maschine 1 zwischen einer elektrischen Versorgung 15 und der elektrischen Maschine 1 angeordnet.

Gemäß Figur 2 wird ersichtlich, dass über die Drehzahl des Kompressors 3 der Luftdruck in dem Druckluftbehälter 4 einstellbar ist. Das obere Diagramm veranschaulicht den Verlauf der Drehzahl über die Zeit und das untere Diagramm veranschaulicht den Verlauf des Luftdrucks in dem Druckluftbehälter 4 über die Zeit. Der Kompressor 3 wird in einem Auffüllbetrieb A des Schienenfahrzeugs mit maximaler Drehzahl m betrieben bis der Luftdruck im Druckluftbehälter 4 den Abschaltdruck a erreicht. In einem darauf folgenden Streckenbetrieb N des Schienenfahrzeugs wird der Kompressor 3 mit einer variablen Drehzahl, geringfügig oberhalb der minimalen Drehzahl i, betrieben, wobei der Luftdruck im Druckluftbehälter 4 geringfügig größer als der Einschaltdruck e eingestellt wird.

In einem Bremsbetrieb B des Schienenfahrzeugs wird der Kompressor 3 mit der Nenndrehzahl n betrieben und der Druckluftbehälter 4 wird bis zu einem maximalen Überdruck x gespeist, wobei der Kompressor 3 nach Erreichen des maximalen Überdrucks x mit einer variablen Drehzahl, zwischen Nenndrehzahl n und minimaler Drehzahl i, geringfügig oberhalb der minimaler Drehzahl i betrieben wird. Nach Beenden des Bremsbetriebs B wird der Kompressor 3 abgeschaltet und erst bei Erreichen des Einschaltdrucks e auf die minimale Drehzahl i eingestellt. Das Schienenfahrzeug befindet sich somit wieder im Streckenbetrieb N.

Vor einem Stationsbetrieb S erhält die Regelungseinrichtung 5 von dem Zug-Management-System 10 ein Signal über den bevorstehenden Stationsbetrieb S, wobei die Drehzahl des Kompressors 3 auf die maximale Drehzahl m eingestellt wird, um den mindestens einen Druckluftbehälter 4 bis zum maximalen Überdruck x zu speisen. Während des Stationsbetriebs S wird der Kompressor 3 abgeschaltet. Bei Erreichen des Einschaltdrucks e wird der Kompressor 3 auf die minimale Drehzahl i eingestellt. Das Schienenfahrzeug befindet sich nach dem Stationsbetrieb S wieder im Streckenbetrieb N. In einem Over-Night-Standby-Betrieb O wird der Kompressor 3 intermittierend zwischen der minimalen Drehzahl i beim Abfallen des Druckes auf den Einschaltdruck e und der Abschaltung des Kompressors 3 beim Erreichen des Abschaltdrucks a betrieben.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass der Kompressor 3 eine Vielzahl von Druckluftbehältern 4 speist. Darüber hinaus ist es auch denkbar, dass das Stellglied 8 über zwei Ausgänge verfügt und somit sowohl die Drehzahl der elektrischen Maschine 1 als auch die Drehzahl des Kühlerlüfters 14 durch die Regelungseinrichtung 5 einstellt.

### Bezugszeichenliste

- 1: elektrischen Maschine
- 2: Antriebswelle
- 3: Kompressor
- 4: Druckluftbehälter
- 5: Regelungseinrichtung
- 6: druckluftführende Leitung
- 7: Drucksensor
- 8: Stellglied
- 9: Kühlereinheit
- 10: Zug-Management-System
- 11: Vorabscheider
- 12: Luftaufbereitungsanlage
- 13a, 13b: Temperatursensor
- 14: Kühlerlüfter
- 15: elektrische Versorgung
- a: Abschaltdruck
- e: Einschaltdruck
- i: minimale Drehzahl
- m: maximale Drehzahl
- n: Nenndrehzahl
- x: maximaler Überdruck
- A: Auffüllbetrieb
- B: Bremsbetrieb
- N: Streckenbetrieb
- O: Over-Night-Standby-Betrieb
- S: Stationsbetrieb

## Patentansprüche

1. Kompressorsystem für ein Schienenfahrzeug, umfassend einen von einer elektrischen Maschine (1) über eine Antriebswelle (2) angetriebenen Kompressor (3) zur Erzeugung von Druckluft für mindestens einen Druckluftbehälter (4), wobei die elektrische Maschine (1) zumindest mittelbar über eine Regelungseinrichtung (5) zum Betrieb der elektrischen Maschine (1) mit zumindest einer zwischen einer maximalen Drehzahl (m) und einer minimalen Drehzahl (i) befindlichen Nenndrehzahl (n) ansteuerbar ist, wobei ferner in einer stromabwärts vom Kompressor (3) angeordneten druckluftführenden Leitung (6) zumindest ein Drucksensor (7) zur Bestimmung des Drucks für die Regelungseinrichtung (5) angeordnet ist, wobei ein Stellglied (8) zur kontinuierlichen Beeinflussung der Drehzahl der elektrischen Maschine (1) zwischen einer elektrischen Versorgung (15) und der elektrischen Maschine (1) angeordnet ist, wobei die Ansteuerung des Stellglieds (8) über die Regelungseinrichtung (5) erfolgt,
**dadurch gekennzeichnet, dass** die Regelungseinrichtung (5) zumindest mittelbar eine stromabwärts des Kompressors (3) angeordnete Kühlereinheit (9) mit Kühlerlüfter (14) ansteuert, wobei eine Drehzahl des Kühlerlüfters (14) kontinuierlich durch die Regelungseinrichtung (5) einstellbar ist.

2. Verfahren zur Steuerung eines Kompressorsystems nach Anspruch 1, wobei das Kompressorsystem ein Kompressorsystem eines Schienenfahrzeuges ist, **dadurch gekennzeichnet, dass** der Kompressor (3) in Abhängigkeit eines Betriebszustands des Schienenfahrzeugs mit einer variablen, zwischen der maximalen Drehzahl (m) und der minimalen Drehzahl (i), jeden Zwischenwert einnehmenden Drehzahl, betrieben wird.

3. Verfahren nach Anspruch 2,
**dadurch gekennzeichnet, dass** der Kompressor (3) in einem Auffüllbetrieb (A) des Schienenfahrzeugs mit der maximalen Drehzahl (m) betrieben wird.
LK:AL

4. Verfahren nach Anspruch 2,
**dadurch gekennzeichnet, dass** der Kompressor (3) in einem Streckenbetrieb (N) des Schienenfahrzeugs mit einer variablen Drehzahl, geringfügig oberhalb der minimalen Drehzahl (i), betrieben wird, wobei der Luftdruck in dem mindestens einen Druckluftbehälter (4) geringfügig größer als der Einschaltdruck (e) eingestellt wird.

5. Verfahren nach Anspruch 2,
**dadurch gekennzeichnet, dass** der Kompressor (3) in einem Bremsbetrieb (B) des Schienenfahrzeugs mit einer Drehzahl zwischen der Nenndrehzahl (n) und der maximalen Drehzahl (m) betrieben wird und der mindestens eine Druckluftbehälter (4) mindestens bis zum Abschaltdruck (a) des Kompressors (3) gespeist wird, jedoch höchstens bis zu einem maximalen Überdruck (x) gespeist wird, wobei der Kompressor (3) frühestens nach Erreichen des Abschaltdrucks (a) jedoch spätestens nach Erreichen des maximalen Überdrucks (x) mit einer variablen Drehzahl, zwischen Nenndrehzahl (n) und minimaler Drehzahl (i), betrieben wird.

6. Verfahren nach Anspruch 5,
**dadurch gekennzeichnet, dass** der Kompressor (3) nach Beenden des Bremsbetriebs (B) abgeschaltet wird und bei Erreichen des Einschaltdrucks (e) auf die minimale Drehzahl (i) eingestellt wird.

7. Verfahrens nach Anspruch 2,
**dadurch gekennzeichnet, dass** die Regelungseinrichtung (5) vor einem Stationsbetrieb (S) von einem Zug-Management-System (10) ein Signal über den bevorstehenden Stationsbetrieb (S) erhält, wobei die Drehzahl des Kompressors (3) mindestens auf die Nenndrehzahl (n) eingestellt wird, um den mindestens einen Druckluftbehälter (4) bis zum maximalen Überdruck (x) zu speisen.

8. Verfahrens nach Anspruch 7,
**dadurch gekennzeichnet, dass** der Kompressor (3) während des Stationsbetriebs (S) entweder abgeschaltet wird oder mit der minimalen Drehzahl (i) betrieben wird.

9. Verfahren nach Anspruch 2,
**dadurch gekennzeichnet, dass** der Kompressor (3) in einem Over-Night-Standby-Betrieb (O) intermittierend zwischen der minimalen Drehzahl (i) beim Abfallen des Druckes auf den Einschaltdruck (e) und der Abschaltung des Kompressors (3) beim Erreichen des Abschaltdrucks (a) betrieben wird.

## Claims

1. Compressor system for a rail vehicle, comprising a compressor (3) driven by an electric machine (1) via a driveshaft (2) for producing compressed air for at least one compressed-air reservoir (4), wherein the electric machine (1) can be controlled at least indirectly via a regulating device (5) for operating the electric machine (1) at least at a set-point rotation speed (n) which is between a maximum rotation speed (m) and a minimum rotation speed (i), wherein further, in a pressure-carrying line (6) arranged downstream from the compressor (3) there is arranged at least one pressure sensor (7) for determining the pressure for the regulating device (5), wherein an actuator (8) for the continuous influencing of the rotation speed of the electric machine (1) is arranged between an electric supply (15) and the electric machine (1), and wherein the regulating device (5) is controlled by the actuator (8),
**characterised in that** at least indirectly, the regulating device (5) controls a cooler unit (9) with a cooling fan (14) arranged downstream from the compressor (3), such that a rotation speed of the cooling fan (14) can be continuously adjusted by means of the regulating device (5).

2. Method for controlling a compressor system according to Claim 1,
wherein the compressor system is a compressor system of a rail vehicle,
**characterised in that** the compressor (3) is operated as a function of an operating status of the rail vehicle, at a variable rotation speed that can adopt any intermediate rotation speed value between the maximum rotation speed (m) and the minimum rotation speed (i).

3. Method according to Claim 2,
**characterised in that** during a filling operation (A) of the rail vehicle, the compressor (3) is operated at the maximum rotation speed (m).

4. Method according to Claim 2,
**characterised in that** during track operation (N) of the rail vehicle, the compressor (3) is operated at a variable rotation speed slightly above the minimum rotation speed (i), so that the air pressure in the at least one compressed-air reservoir (4) is slightly higher than the activation pressure (e).

5. Method according to Claim 2,
**characterised in that** during braking operation (B) of the rail vehicle the compressor (3) is operated at a rotation speed between the set-point rotation speed (n) and the maximum rotation speed (m), and the at least one compressed-air reservoir (4) is fed at least until the deactivation pressure (a) of the compressor (3) is reached, but is fed at most up to a maximum overpressure (x), wherein the compressor (3) is operated at the earliest after the deactivation pressure (a) is reached but at the latest after the maximum overpressure (x) is reached, at a variable rotation speed between the set-point rotation speed (n) and the minimum rotation speed (i).

6. Method according to Claim 5,
**characterised in that** after the braking operation (B) has ended, the compressor (3) is switched off and when the activation pressure (e) is reached, it is adjusted to the minimum rotation speed (i).

7. Method according to Claim 2,
**characterised in that** before operation (S) while the train is standing at a station, the regulating device (5) receives a signal from a train management system (10) about the forthcoming station operation (S), such that the rotation speed of the compressor (3) is set at least to the set-point rotation speed (n) in order to feed the at least one compressed-air reservoir (4) up to the maximum overpressure (x).

8. Method according to Claim 7,
**characterised in that** during the station operation (S) the compressor (3) is either switched off or operated at the minimum rotation speed (i).

9. Method according to Claim 2,
**characterised in that** during an overnight standby operation (O), the compressor (3) is operated intermittently between the minimum rotation speed (i) when the pressure falls to the activation pressure (e), and switching off of the compressor (3) when the deactivation pressure (a) is reached.

## Revendications

1. Système de compresseur d'un véhicule ferroviaire, comprenant un compresseur (3) entraîné par une machine (1) électrique par l'intermédiaire d'un arbre (2) d'entraînement, pour la production d'air comprimé pour au moins un réservoir (4) d'air comprimé, la machine (1) électrique pouvant être commandée, au moins indirectement par l'intermédiaire d'un dispositif (5) de régulation du fonctionnement de la machine (1) électrique, a au moins une vitesse (m) de rotation nominale se trouvant entre une vitesse (m) de rotation maximum et une vitesse (i) de rotation minimum, dans lequel en outre au moins un capteur (7) de pression, pour la détermination de la pression pour le dispositif (5) de régulation, est monté dans un conduit (6) dans lequel passe de l'air comprimé, monté en aval du compresseur (3), dans lequel un actionneur (8), pour influencer continuellement la vitesse de rotation de la machine (1) électrique, est monté entre une alimentation (15) électrique et la machine (1) électrique, la commande de l'actionneur (8) s'effectuant par le dispositif (5) de régulation,
**caractérisé en ce que** le dispositif (5) de régulation commande au moins indirectement un groupe (9) de refroidissement, monté en aval du compresseur (3) et ayant un ventilateur (14) de refroidissement, une vitesse de rotation du ventilateur (14) de refroidissement pouvant être réglée en continu par le dispositif (5) de régulation.

2. Procédé de commande d'un système de compresseur suivant la revendication 1, dans lequel le système de compresseur est un système de compresseur d'un véhicule ferroviaire,
**caractérisé en ce que** l'on fait fonctionner le compresseur (3) en fonction d'un état de fonctionnement du véhicule ferroviaire, à une vitesse de rotation variable prenant chaque valeur intermédiaire entre la vitesse (m) de rotation maximum et la vitesse (i) de rotation minimum.

3. Procédé suivant la revendication 2,
**caractérisé en ce que** l'on fait fonctionner le compresseur (3) dans un fonctionnement (A) de remplissage complet du véhicule ferroviaire à la vitesse (m) de rotation maximum.

4. Procédé suivant la revendication 2,
**caractérisé en ce que** l'on fait fonctionner le compresseur (3) dans un fonctionnement (N) en parcours du véhicule ferroviaire à une vitesse de rotation variable, légèrement au-dessus de la vitesse (i) de rotation minimum, la pression de l'air dans le au moins un réservoir (4) d'air comprimé étant réglée à une valeur légèrement plus grande que la pression (e) de mise en route.

5. Procédé suivant la revendication 2,
**caractérisé en ce que** l'on fait fonctionner le compresseur (3) dans un fonctionnement (B) en freinage du véhicule ferroviaire à une vitesse de rotation comprise entre la vitesse (n) de rotation nominale et la vitesse (m) de rotation maximum et on alimente le au moins un réservoir (4) d'air comprimé au moins jusqu'à la pression (a) d'arrêt du compresseur (3), toutefois au plus jusqu'à une surpression (x) maximum, le compresseur (3) fonctionnant au plus tôt après que la pression (a) d'arrêt est atteinte, toutefois au plus tard après que la surpression (x) maximum est atteinte, à une vitesse de rotation variable comprise entre la vitesse (n) de rotation nominale et la vitesse (i) de rotation minimum.

6. Procédé suivant la revendication 5,
**caractérisé en ce que** l'on arrête le compresseur (3) après que le fonctionnement (B) en freinage est achevé et, lorsque la pression (e) de démarrage est atteinte, on le règle à la vitesse (i) de rotation minimum.

7. Procédé suivant la revendication 2,
**caractérisé en ce que** le dispositif (5) de régulation reçoit, avant un fonctionnement (S) en station, d'un système (10) de gestion des trains un signal sur le fonctionnement (S) en station imminent, la vitesse de rotation du compresseur (3) étant réglée au moins à la vitesse (n) de rotation nominale, afin d'alimenter le au moins un réservoir (4) d'air comprimé jusqu'à la surpression (x) maximum.

8. Procédé suivant la revendication 7,
**caractérisé en ce que** le compresseur pendant le fonctionnement (S) en station est arrêté ou on le fait fonctionner à la vitesse (i) de rotation minimum.

9. Procédé suivant la revendication 2,
**caractérisé en ce que** l'on fait fonctionner le compresseur (3) dans un fonctionnement (O) de secours pendant la nuit par intermittence entre la vitesse (i) de rotation minimum, lorsque la pression s'abaisse à la pression (e) de mise en route, et l'arrêt du compresseur (3), lorsque la pression (4) d'arrêt est atteinte.
